# EUROPEAN PATENT APPLICATION

(11) **EP 0 701 193 A1**
(43) Date of publication of application: **13.03.1996**
(21) Application number: 95112908.9
(22) Date of filing: 17.08.1995
(51) Int. Cl.: G06F 1/32

(54) **Expanded mode microcontroller**

(30) Priority: 09.09.1994 GB 9418226
(71) Applicant: MOTOROLA, INC., Schaumburg, IL 60196 (US)
(72) Inventor: Deluca, Joan, Boca Raton, Florida 33486 (US); Bron, Michel, CH-1006 Lausanne (CH); Boulian, Eric, CH-1212 Grand-Lancy (CH)
(74) Representative: Hudson, Peter David

(57) **Abstract**

In the expanded mode of operation, a microprocesssor (100) is coupled to external address (1) and data (4) buses and other lines, such as clock (3) and read/write (2), which are required to allow access to external memories, registeers and other peripherals. The microcontroller (100) includes a selector (8) to select whether an internal or an external resource is to be accessed, and a controller (5) for controlling the external lines or buses according to whether the resource to be accessed is internal or external by freezing them if they are not to be used, so as to save power.

## Description

### FIELD OF THE INVENTION

This invention relates to microcontrollers, and more especially to microcontrollers which can operate in both single chip and expanded mode, where access to additional external resources, such as memory is required.

### BACKGROUND OF THE INVENTION

In the single chip mode of operation, all resources, such as memory or registers, are internal to the chip and are connected to the central processing unit via internal address and data buses. In the expanded mode of operation, external address and data buses and other lines, such as clock and read/write, are required to allow access to external memories, registeers and other peripherals. These buses consume power even when all activity is internal to the microcontroller. In some cases, unwanted rfi may be also generated.

It is therefore an object of the present invention to reduce the power consumption and/or the rfi of these external lines when activity is purely internal.

### BRIEF SUMMARY OF THE INVENTION

Accordingly, the invention provides a microcontroller having ports for communication with external resources via external lines or buses, the microcontroller comprising means for selecting whether an internal or an external resource is to be accessed, and means for controlling the operation of one or more of the external lines or buses according to whether the resource to be accessed is internal or external.

Preferably, there is provided means for enabling or disabling the control means. Preferably, the control means only permits the external line or bus to be active when an external resource is to be accessed. The external line or bus can be one or more of an address bus, a data bus, and control lines, such as a read/write line and an external clock line. When the address bus is not active, the previous address on the bus is preferably maintained. The control lines are preferably maintained at a predetermined level. When the data bus is not active it can either be left floating or be pulled to a known voltage level.

In a preferred embodiment, the control means comprises a logic circuit comprising a first gate having a first input from the selection means, a second input from the enable/disable means and an output coupled to the first input of a second gate having a second input from the internal line or bus corresponding to the external line or bus to be controlled and an output.

When the line or bus to be controlled is the address bus, the control means preferably comprises a latch coupled between the output of the logic circuit and the external address bus.

### BRIEF DESCRIPTION OF THE DRAWINGS

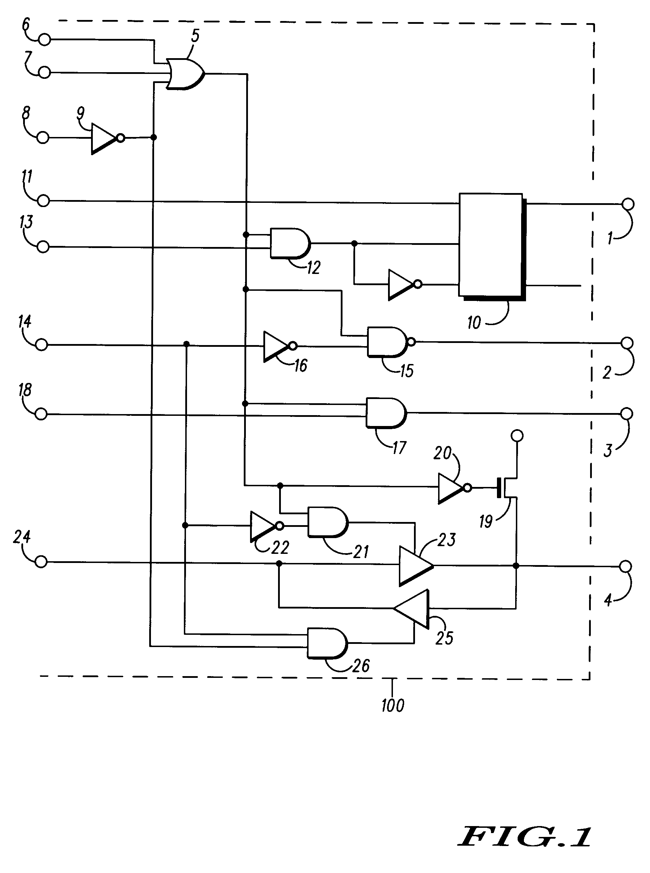

One embodiment of the invention will now be more fully described, by way of example, with reference to the drawing which shows a logical circuit incorporated in a microcontroller.

### DETAILED DESCRIPTION

Thus, as shown in the drawing, a logical circuit in a microcontroller (100) is used to freeze or disable external lines or buses when they are not being used. These external lines or buses include an external address bus 1 providing an external address signal EXT_ADDR, an external read/write bus 2 providing an external read/write signal EXT_RW, an external clock line 3 providing an external clock signal EXT_E, and an external data bus 4 providing an external data signal EXT_DATA, which can be either read from or written to the external data bus 4 depending on the external read/write signal EXT_RW.

In order to determine whether the external lines or buses are to be frozen, an OR gate 5 has three inputs. A first input 6 is a reset signal RESET, which is used when the microcontroller is being initiated to prevent the external lines and buses from being frozen so that they are intialised. A second input 7 is a signal FREEZ_DIS, which is used to selectively disable the freeze operation if it is desired to operate the microcontroller with the external buses and lines always active. The third input 8 is a signal IMMP is provided in the microcontroller to indicate whether the lines or buses to be activated are internal or external. This signal IMMP is usually at level "1" when the activity is internal, so the signal IMMP is passed through an inverter 9 before being passed to the OR gate 5. The OR gate 5 gives a "1" output if any of the inputs are "1", so that if the microcontroller is being reset or if the freeze mode is disabled or if activity is on the external buses or lines, then the output signal FRIMB of the OR gate 5 is a "1".

The external address bus 1 is coupled to an internal address bus 11 via a latch 10, which, in effect, is composed of half a flip-flop. The internal address bus 11 is coupled to a D port of the latch and the external address bus 1 is coupled to a Q port of the latch. The latch has a further port C and has the property that port D is coupled to port Q when the signal input to port C is "1", but that ports D and Q are uncoupled when the signal at port C is "0".

When the external address bus 1 is to be used, it is desired that the latch 10 be "transparent" so that the same value is on both the internal address bus 11 and the external address bus 1. However, when the external address bus 1 is to be frozen, or made inactive, then the latch 10 is required to retain the previous value on the buses 1 and 11.

Thus, the output signal FRIMB from the OR gate 5 is used as one input to an AND gate 12, whose other input is an address clock signal ADDR_STROB from an address clock line 13. The output of the AND gate 12 is therefore "1" only when both signals FRIMB and ADDR_STROB are "1", that is when the activity is external or freeze is disabled or the status is in reset mode and the address clock is in on phase. In this case, the output "1" of the AND gate 12 is passed to the C port of latch 10 and the ports D and Q are coupled. If the output of the AND gate 12 is "0", then the ports D and Q are decoupled so that the external address bus 1 is effectively frozen. The output signal from the AND gate 12 is also passed via an inverter 13 to an inverse C port of latch 10.

For the external read/write bus 2 to be frozen, it should be effectively in READ mode with the external read/write signal EXT_RW being a "1". An internal read/write bus 14 has an internal read/write signal INT_RW, which is a "1" for READ and a "0" for WRITE. This internal read/write signal INT_RW is thus used, via an inverter 16, as one input to a NAND gate 15, whose other input is the output signal FRIMB from the OR gate 5. Thus, when the internal read/write signal INT_RW is a "1", indicating READ, the output of the inverter 16 is a "0", and the output of NAND gate 15 will also be a "1", indicating a READ, irrespective of the value of the output signal FRIMB from the OR gate 5. If, however, the internal read/write signal INT_RW is a "0", indicating WRITE, then the output of NAND gate 15 will only be a "0", indicating WRITE, if the output signal FRIMB from the OR gate 5 is a "1", that is, if the activity is external or freeze is disabled or the status is in reset mode.

The external clock line 3, which provides the external clock signal EXT_E is coupled to the output of an AND gate 17 having one input coupled to receive the output signal FRIMB from the OR gate 5 and the other input coupled to receive an internal clock signal INT_E from an internal clock line 18. Thus, if the output signal FRIMB from the OR gate 5 is a "1", that is, if the activity is external or freeze is disabled or the status is in reset mode, then the external clock signal EXT_E will mimic the internal clock signal INT_E. If however, the output signal FRIMB from the OR gate 5 is a "0", that is, if the activity is internal and freeze is not disabled and the status is not in reset mode, then the output of AND gate 17 will be "0", irrespective of the internal clock signal INT_E and the external clock line will be disabled.

The external data bus 4 is coupled to one current electrode of a transistor 19 , whose other current electrode is coupled to a positive voltage reference V_{dd}. The transistor 19 has a weak resistance to provide a well defined voltage level for the external data bus 4 when it is frozen. The transistor 19 therefore has its control electrode coupled to receive the output signal FRIMB from the OR gate 5 via an inverter 20 so that the transistor 19 is switched "on" when output signal FRIMB from the OR gate 5 is a "0", that is, if the activity is internal and freeze is not disabled and the status is not in reset mode.

The output signal FRIMB from the OR gate 5 is also passed to one input of an AND gate 21, whose other input is the internal read/write signal INT_RW from the internal read/write bus 14 via an inverter 22. Thus, if the internal read/write signal INT_RW is a "0", indicating WRITE, and the output signal FRIMB from the OR gate 5 is a "1", that is, if the activity is external or freeze is disabled or the status is in reset mode, then the output of the AND gate 21 will be a "1". The output of the AND gate 21 is used to control a tristate buffer 23 in the external write path between an internal data bus 24 providing an internal data signal INT_DATA to be written onto the external data bus 4 as an external data signal EXT_DATA. When the output od AND gate 21 is a "1", the tristate buffer 23 is enabled , thus activating the write path.

In order to read the external data signal EXT_DATA from the external data bus 4 to the internal data bus 24 when the internal read/write signal INT_RW on the internal read/write bus 14 is a "1" indicating READ, a further truistate buffer 25 is provided in the read path. This buffer 25 is controlled by the output of AND gate 26 whose inputs are the internal read/write signal INT_RW from the internal read/write bus 14 and the inverted IMMP signal from inverter 9. Thus, if the IMMP signal is "0", indicating external activity, and the internal read/write signal is "1", indicating a READ, then the tristate buffer 25 is enabled, activating the read path. It will be apparent that the AND gate 26 does not receive the output signal FRIMB from the OR gate 5, but only the inverted IMMP signal from inverter 9, since for a read operation, neither the RESET signal, which is used when the microcontroller is being initiated to prevent the external lines and buses from being frozen so that they are intialised, nor the FREEZ_DIS signal, which is used to selectively disable the freeze operation, are appropriate.

It will be appreciated that although only one particular embodiment of the invention has been described in detail, various modifications and improvements can be made by a person skilled in the art without departing from the scope of the present invention.

## Claims

1. A microcontroller having ports for communication with external resources via external lines or buses, the microcontroller comprising selection means for selecting whether an internal or an external resource is to be accessed, and control means for controlling the operation of at least one of the external lines or buses according to whether the resource to be accessed is internal or external.

2. A microcontroller according to claim 1, further comprising enable/disable means for enabling or disabling the control means.

3. A microcontroller according to claim 2, wherein the control means comprises a logic circuit comprising a first gate having a first input from the selection means, a second input from the enable/disable means and an output coupled to the first input of a second gate having a second input from the internal line or bus corresponding to the external line or bus to be controlled and an output.

4. A microcontroller according to any preceding claim, wherein the control means only permits the at least one external line or bus to be active when an external resource is to be accessed.

5. A microcontroller according to any preceding claim, wherein the external lines or buses can be one or more of an address bus, a data bus, and control lines, such as a read/write line and an external clock line.

6. A microcontroller according to claim 5, wherein the at least one external line or bus is an address bus, and, when the address bus is not active, the previous address on the address bus is maintained.

7. A microcontroller according to claim 6, wherein the control means comprises a latch coupled between the output of the logic circuit and the external address bus.

8. A microcontroller according to claim 5, wherein the at least one external line or bus is a control line, which is maintained at a predetermined level when not active.

9. A microcontroller according to claim 5, wherein the at least one external line or bus is a data bus, and, when the data bus is not active it is pulled to a known voltage level.
